# EUROPEAN PATENT SPECIFICATION

(11) **EP 3 472 499 B1**
(45) Date of publication and mention of the grant of the patent: **25.12.2019**
(21) Application number: 17737654.8
(22) Date of filing: 16.06.2017
(51) Int. Cl.: F16K 3/02, C10B 25/10, F16K 3/32, F16K 3/34, C10B 55/00

(54) **VALVE WITH EROSION PROTECTION DEVICE**
VENTIL MIT EROSIONSSCHUTZVORRICHTUNG
SOUPAPE À DISPOSITIF DE PROTECTION CONTRE L'ÉROSION

(30) Priority: 17.06.2016 DE 102016111169
(43) Date of publication of application: 24.04.2019
(73) Proprietor: ZMK Technologies GmbH, 52382 Niederzier, Düren (DE)
(72) Inventor: KLEIN, Rüdiger, 52382 Duren (DE)
(74) Representative: Geskes, Christoph
(86) International application number: PCT/SG2017/050307
(87) International publication number: WO 2017/217938

(56) References cited:
- EP-A2- 0 185 204
- DE-A1- 3 010 492
- FR-A1- 2 521 249
- US-A1- 2006 042 691
- US-A1- 2006 131 534

## Description

### CROSS-REFERENCE TO RELATED APPLICATION

This application claims priority from German patent application 102016111169.4.

### FIELD OF THE INVENTION

The present invention relates to a valve, in particular the invention relates to a double-gate valve. The invention also relates to the use of a valve in a coking or in a cracking process.

### BACKGROUND

The following discussion of the background to the invention is intended to facilitate an understanding of the present invention only. It should be appreciated that the discussion is not an acknowledgement or admission that any of the material referred to was known or part of common general knowledge of the person skilled in the art in any jurisdiction as at the priority date of the invention.

Valves for use in a coking and/or cracking process have to meet stringent requirements relating to sealing and durability. In addition to liquids and/or gases, the material fed through such valves under pressure may also comprise solids, for example very fine particles such as impurities, dust, soot and residues from a coking or a cracking process. US 2006/0042691 A1 discloses a double-disk slide valve. FR 2 521 249 A1 discloses a slide control valve for powders. DE 30 10 492 A1 discloses a check valve. EP 0 185 204 A2 discloses a gate plate. US 2006/131534 A1 discloses a control valve. US 3 743 238 A discloses a control valve. US 2011/303297 A1 discloses a pump drive module.

Such valves often have at least one opening and a closure part, in particular in the form of a slide gate, which can be moved in relation to the opening. For the purpose of opening the valve, the slide gate is displaced laterally in relation to an opening until the opening step is completed to the full extent. At the start of the opening operation, for a short time just a gap is opened until finally, when the valve is opened to the full extent, the entire opening operation is completed. The material fed through the valve under pressure is accelerated through the gap of the valve as it is through a nozzle. The accelerated solids subject the valve to material erosion by abrasion, and this can therefore result in sealing being compromised. The task of changing over a valve or parts of the valve, for example sealing seats or moving parts such as a pipe bridge, is a very time-consuming and expensive one in particular when the valve is installed in coking or cracking plants.

It is therefore an object of the present invention to provide a novel valve which is particularly durable and erosion-resistant.

### SUMMARY OF THE INVENTION

This object is partially or wholly achieved by the valve according to Claim 1 and by the use of the valve according to Claim 15 and by the method according to Claim 16.

The valve according to the invention is suitable preferably for the feedthrough of materials. The valve is formed preferably from metal. The valve has a housing with a first housing part. The first housing part is designed, for example, in the form of a pipe socket. The first housing part may have an entry opening. A material can flow into the first housing part through said entry opening. The first housing part may also have an exit opening. The material can flow out of the first housing part through said exit opening. The first housing part may have an inner wall. The inner wall can form a channel from the entry opening to the exit opening of the first housing part.

The inner wall is, for example, tubular. The first housing part has, particularly preferably, a cylindrical inner wall. The inner wall can therefore have a circular cross section. Other cross sections, for example elliptical and square or polygonal cross sections, are also conceivable.

The inner wall can have a constant cross section. The inner wall can constitute a through-bore. It is also possible for the inner wall to have a plurality of portions of different cross sections, for example a funnel-shaped or frustoconical portion.

The valve according to the invention has a second housing part. The second housing part may be designed like the first housing part. The second housing part may have an entry opening. A material can flow into the second housing part through said entry opening. The second housing part may also have an exit opening. The material can flow out of the second housing part through said exit opening. The second housing part may have an inner wall. The inner wall can form a channel from the entry opening of the second housing part to the exit opening of the second housing part. The inner wall is preferably tubular. Particularly preferably, the second housing part likewise has a cylindrical inner wall. In order to avoid turbulence, the exit opening of the first housing part is preferably located opposite the entry opening of the second housing part. Furthermore, the inner wall of the first housing part is preferably aligned with the inner wall of the second housing part.

For a high level of sealing of the valve, the first housing part comprises preferably a sealing seat. The sealing seat may be formed in one piece with the first housing part, e.g. in the form of a hard-faced or hardened portion. The hard-faced or hardened portion can be formed by means of a welding process and/or a hardening process, e.g. transformation hardening.

The sealing seat may be a separate component. The sealing seat may be mounted resiliently on the first housing part. For example, the sealing seat may be a sealing ring, in particular made of metal or of an elastic material. The sealing seat may have a cylindrical inner wall, which is preferably aligned with the cylindrical inner wall of the first housing part of the valve. The sealing seat is arranged, for example, on the exit opening of the first housing part. The sealing seat has preferably an annular first sealing surface, which is directed towards the exit opening of the first housing part. The sealing seat also has preferably an annular second sealing surface, which is directed away from the exit opening of the housing part. The sealing seat may have a hardened portion, in particular an annular hardened portion formed on the second sealing surface of the sealing seat.

As an alternative, or in addition, it is also possible for the first housing part to have a sealing surface. The latter may be of annular design. Said sealing surface may be arranged to enclose the exit opening of the first housing part.

Expediently, the second housing part may likewise comprise a sealing seat. The latter may be arranged or designed in a manner corresponding to the sealing seat of the first housing part, e.g. it may be formed in one piece with the second housing part, in the form of a hardened portion, or separately, in the form of a sealing ring with a hardened portion.

Preferably, the first housing part has a resiliently mounted separate sealing seat and the second housing part has a sealing seat which is arranged on the second housing part without resilient mounting, e.g. a sealing seat which is formed in one piece with the second housing part. The sealing seat has preferably a cylindrical inner wall, which is aligned with the inner wall of the second housing part. The sealing seat of the second housing part has preferably an annular first sealing surface, which is directed away from the entry opening. The sealing seat of the second housing part has preferably an annular second sealing surface, which is directed towards the entry opening. The sealing seat of the second housing part may have a hardened portion, in particular an annular hardened portion formed on the first sealing surface of the sealing seat of the second housing part.

As an alternative, or in addition, it is possible for the second housing part to have a sealing surface. The latter may be of annular design. Said sealing surface may be arranged to enclose the entry opening of the second housing part.

Coatings, hard-faced or hardened portions and/or seals may be arranged or formed on the aforementioned sealing surfaces of the first housing part and of the second housing part, including the sealing seats. The hard-faced or hardened portion is preferably of annular design and/or is arranged on the respective sealing surface.

The valve according to the invention has a closure part which is arranged in a movable manner between the first housing part and the second housing part. The closure part may be designed in the form of a slide gate and comprise, in particular, a pipe bridge and a gate or a double gate, in other words two gates. The slide gate is designed in the form of a double-slide gate. The valve according to the invention is designed in the form of a double-gate valve. The double gate of the closure part, for the purpose of closing the valve, can be arranged between the exit opening of the first housing part and the entry opening of the second housing part.

The two gates may be of circular design. The two gates of the double gate can be arranged parallel to one another and one above the other. The two gates can be spaced apart such that they can be spread apart from one another by a so-called wedge device for the purpose of generating a contact-pressure force.

The double gate of the closure part may comprise a first and a second sealing surface. In the case of the double gate of a closure part designed in the form of a double-slide gate, an upper side of an upper gate and an underside of a lower gate may each be designed in the form of a sealing surface.

The closure part may have an entry opening and an exit opening and an inner wall. The inner wall can form a channel from the entry opening to the exit opening of the closure part. The inner wall of the closure part may be arranged in the pipe bridge, i.e. the entry and exit openings of the closure part are the entry and exit openings of the pipe bridge. For the purpose of opening the valve, the pipe bridge can be arranged preferably between the exit opening of the first housing part and the entry opening of the second housing part. This means that, in an open position of the valve, the pipe bridge can be arranged preferably in a connecting manner between the first housing part and the second housing part, wherein the inner wall of the closure part forms the inner wall of the pipe bridge. The entry opening of the closure part corresponds preferably with the exit opening of the first housing part and the entry opening of the second housing part corresponds preferably with the exit opening of the closure part. The inner wall of the closure part is preferably of at least partially tubular design. The closure part has, particularly preferably, a cylindrical inner wall. The inner wall of the closure part may be designed like the inner wall of the first housing part.

The pipe bridge may be in one or more parts. The pipe bridge may have at least a first pipe-bridge portion and a second pipe-bridge portion, each comprising an inner wall, e.g. a tubular inner wall and, in particular, a cylindrical inner wall. The closure part may have a multi-part inner wall. The pipe bridge comprises, for example, an upper, first pipe-bridge portion with the entry opening of the pipe bridge and a lower, second pipe-bridge portion with the exit opening of the pipe bridge. The pipe-bridge portions may be connected, for example, by at least one compensator. The compensator may be of flexible design, e.g. it may be elastically deformable.

The first pipe-bridge portion has preferably an outer annular sealing surface arranged peripherally on the entry opening. The second pipe-bridge portion has preferably an outer annular sealing surface arranged peripherally on the exit opening. Sealing seats may be arranged on one or on both of the sealing surfaces. The sealing seats may be designed like the sealing seats of the first and second housing parts.

Coatings, hard-faced or hardened portions and/or seals may be arranged or formed on the sealing surfaces of the closure part. Said coatings, hard-faced or hardened portions and/or seals may be adapted to the sealing surfaces and, in particular, to the coatings, hard-faced or hardened portions and/or seals of the first and of the second housing parts. For example, the first and/or second sealing surface(s) of the gate of a closure part designed in the form of a single-slide gate may have a respective sealing surface with an annular hard-faced or hardened portion on the upper side and the underside of the gate.

An upper, first gate of a closure part designed in the form of a double-slide gate may have a sealing surface with a hardened portion on the upper side of the first gate. A lower, second gate of a closure part designed in the form of a double-slide gate may have a sealing surface with a hardened portion on the underside of the second gate.

The pipe bridge and the gate of a closure part designed in the form of a single-slide gate may be arranged one beside the other in the closure part. The pipe bridge and the gate may be arranged in a displaceable carrier plate. The carrier plate may have two openings, in particular circular openings, arranged one beside the other in order for the pipe bridge and the gate to be arranged therein.

The pipe bridge and the double gate of a closure part designed in the form of a double-slide gate may be arranged one beside the other in the closure part. The pipe bridge and the double gate may be arranged in two carrier plates which are spaced apart parallel to one another and arranged one above the other. The carrier plates may have in each case two openings, in particular circular openings, arranged one beside the other in order for the pipe bridge and a gate of the double gate to be arranged therein.

According to the invention, in an open position of the valve, the exit opening of the first housing part is assigned or aligned to the entry opening of the closure part and the exit opening of the closure part is assigned or aligned to the entry opening of the second housing part. The flow direction of the flow going through the valve runs correspondingly. The inner wall of the closure part is preferably designed such that, in an open position of the valve, said inner wall is aligned, at least in part, with the inner wall of the first and of the second housing parts.

In the open position of the valve, materials fed into the valve, such as gases, liquids and/or solids, can be fed via the first housing part, through the closure part, to the second housing part. The second housing part is understood to be the housing part which is arranged downstream of the first housing part, as seen in the flow direction of a material fed into the valve.

In the closure position of the valve, materials fed into the valve, such as gases, liquids and/or solids, cannot be fed from the first housing part, through the closure part, to the second housing part. The openings of the closure part and of the pipe bridge are not assigned or aligned to the respective openings of the first and second housing parts. Rather, the exit opening of the first housing part and the entry opening of the second housing part may be closed by the closure part, e.g. by a gate or a double gate. Throughflow from the first housing part to the second housing part is then blocked. The open position of the valve differs from the closed position of the valve in terms of the position of the movably arranged closure part in relation to the housing.

An actuating device can be used to displace the closure part, or the slide gate, from a closed position (in which the valve is closed for example by the double gate), into an open position, in the direction of the actuating device, wherein the valve is open for example via the pipe bridge. The closure part, or the slide gate, may be operatively connected to an actuating device via an actuating spindle. The pipe bridge and the gate or the double gate are arranged preferably one beside the other in the closure part, or slide gate, wherein the pipe bridge is arranged behind the double gates, as seen in relation to the actuating device, i.e. it is spaced apart further from the actuating device than the gate or the double gate.

The valve according to the invention comprises an erosion-protection device. The erosion-protection device comprises at least one baffle projecting beyond a contour of the inner wall of the closure part. The erosion-protection device may comprise at least one additional baffle projecting beyond a contour of the inner wall of the first housing part and/or of the inner wall of the second housing part.

The erosion-protection device minimizes direct impact of, and pronounced friction caused by, infed solids on the valve, e.g. on the inner walls, the sealing surfaces and the sealing seats and also on the sealing surfaces of the gate or of the double gate of the closure part of the valve, in particular in that the erosion-protection device influences the through-going flow of the infed material in the valve. The erosion-protection device deflects some of said flow away from the inner walls, the sealing seats and the sealing surfaces of the valve, in particular when the valve is being opened.

The baffle is preferably formed from metal. The baffle has, for example, a thickness of up to 15 mm, preferably of up to 10 mm and particularly preferably of up to 5 mm. The baffle projects beyond a contour of the inner wall of the closure part for example by up to 50 mm, preferably by up to 40 mm and particularly preferably by up to 30 mm. The at least one additional baffle projects beyond a contour of the inner wall of the second housing part and/or of the inner wall of the first housing part.

The baffle is arranged on the inner wall of the closure part. Existing valves can be retrofitted, for example, straightforwardly by virtue of the closure part being exchanged for an erosion-protection device. The baffle is arranged preferably in a region of the inner wall of the closure part which is located closer to the actuating device than other regions of the inner wall, and therefore the baffle of the valve is arranged upstream of the opening-induced gap between the exit opening of the closure part and the entry opening of the second housing part.

The baffle may be arranged in a peripheral region of the entry opening of the closure part. The peripheral region of the entry opening is located on the inner wall of the closure part, in the vicinity of the periphery of the entry opening. The periphery is understood to be an encircling edge of the respective opening. The baffle may be arranged, for example, directly on the periphery of the entry opening of the closure part. However, it is also possible for the baffle to be arranged on the inner wall of the closure part at a spacing apart from the entry opening. For example, the baffle may be arranged on the inner wall of the closure part at a spacing of up to 25 mm, preferably of up to 20 mm and particularly preferably of up to 15 mm from the entry opening or from the periphery of the entry opening.

As an alternative, the baffle may be arranged in a peripheral region of the exit opening of the closure part. The peripheral region of the exit opening is a region of the inner wall of the closure part in the vicinity of the periphery or of the encircling edge of the exit opening. The baffle may be arranged directly on the exit opening, or on the periphery of the exit opening. Furthermore, the baffle may be arranged on the inner wall of the closure part at a spacing for example of up to 25 mm, preferably of up to 20 mm and particularly preferably of up to 15 mm from the exit opening.

At least one additional baffle may be arranged on the inner wall of the first housing part. Preferably, an additional baffle is arranged in a region of the inner wall of the first housing part which is spaced apart further from the actuating device than other regions of the inner wall, and therefore the baffle is arranged upstream of that gap between the exit opening of the first housing part and the entry opening of the closure part which is established when the valve is being opened.

The at least one additional baffle is arranged preferably in a peripheral region of the exit opening of the first housing part. The additional baffle may be arranged directly on the exit opening or on the periphery of the exit opening. Furthermore, the additional baffle may be arranged on the inner wall of the first housing part at a spacing for example of up to 25 mm, preferably of up to 20 mm and particularly preferably of up to 15 mm from the exit opening.

The at least one additional baffle may be arranged on the inner wall of the second housing part. The additional baffle constitutes an obstruction to flow, as a result of which the flow builds up upstream of the baffle. This means that, as a result of the additional baffle, the through-going flow is also already slowed down, and deflected, upstream of the baffle, as seen in the flow direction. It is therefore also possible, by arranging the additional baffle on the inner wall of the second housing part, to protect in particular a sealing seat or a sealing surface on the entry opening of the second housing part against abrasion and erosion.

Preferably, an additional baffle is arranged in a region of the inner wall of the second housing part which is spaced apart further from the actuating device than other regions of the inner wall, and therefore the baffle is arranged directly downstream of that gap between the exit opening of the closure part and the entry opening of the second housing part which is established when the valve is being opened.

The additional baffle is arranged preferably in a peripheral region of the entry opening of the second housing part. The baffle may be arranged, for example, directly on the periphery of the entry opening of the second housing part. However, it is also possible for the additional baffle to be arranged on the inner wall of the second housing part at a spacing apart from the entry opening. The additional baffle can be arranged on the inner wall of the second housing part at a spacing of up to 25 mm, preferably of up to 20 mm and particularly preferably of up to 15 mm from the entry opening or from the periphery of the entry opening.
In some embodiments, an additional baffle can be arranged on suitable regions (inner wall or peripheral region) of the first housing part and/or second housing part. The baffle can preferably be about 10% of the nominal pipe size, and be between 20 to 25 milimetres (mm), and may preferably be up to one third of the length of the closure part. An additional baffle can be also about 10% of the nominal pipe size, and be between 20 to 25 milimetres (mm), and may preferably be up to one third of the length of the housing part.

It is particularly preferable for the at least one baffle of the closure part to comprise at least one plate-like part. The baffle may comprise a planar plate-like portion. For example, the baffle may comprise a thin metal sheet. The baffle can thus be produced or manufactured in a particularly straightforward manner. This also applies to the at least one additional baffle.

The baffle may be designed in the form of a metal sheet cut out in the form of a circle segment or ring segment for adaptation to a cylindrical inner wall of the closure part. This also apllies to additional baffles adapted to a cylindrical inner wall of the first housing part and/or of the second housing part. The baffle comprises, for example, at least one arcuate edge and a straight edge. The arcuate edge can be adapted to a contour in line with the cylindrical inner wall of the first housing part, of the second housing part and/or of the closure part. The baffle preferably has the arcuate edge arranged, and fastened, on the inner wall of the closure part. This also applies to additional baffles arranged, and fastened to an inner wall of the first housing part and/or of the second housing part. Up to a quarter, preferably up to a sixth and particularly preferably up to an eighth of the baffle extends, for example, radially beyond the tubular or cylindrical inner wall of the closure part. Up to a quarter, preferably up to a sixth and particularly preferably up to an eighth of the additional baffle extends, for example, radially beyond the tubular or cylindrical inner wall of the first housing part and/or the second housing part.

To provide for particularly good protective action, the erosion-protection device may comprise at least one surface which is formed orthogonally or approximately orthogonally with respect or in relation to the contour of the inner wall of the closure part and/or of the inner wall of the first housing part.

In order to prevent solids from being deposited on the erosion-protection device, and in order to minimize the pressure loading on the erosion-protection device, the erosion-protection device comprises preferably at least one surface which is inclined in relation to the contour of the inner wall of the closure part and/or of the inner wall of the first housing part. The surface here is inclined preferably at an obtuse angle away from the entry opening of the closure part, of the first housing part and/or of the second housing part.

As an alternative, or in addition, the baffle may have an aperture and/or through-opening. The baffle may preferably have a through-bore. This also applies to the at least one additional baffle. These bores may be formed obliquely in relation to the contour of the inner wall of the closure part, of the first housing part and/or the second housing part. The through-bore is inclined preferably at an obtuse angle away from the entry opening of the closure part, of the first housing part and/or second housing part.

In order to avoid turbulence, and/or in order to achieve effective rerouting or targeted turbulence of a flow in the valve, the erosion-protection device comprises preferably at least one curved surface, in particular an outwardly curved surface, i.e. convex surface. At least one edge of the baffle may be rounded. As an alternative, or in addition, the baffle may have an inwardly curved, i.e. concave, surface. The baffle may have a plurality of curved surfaces. At least one curved surface may be arranged in the valve, for example, such that it is directed towards the entry opening of the first housing part. This means that at least one curved surface can be arranged in the valve to face the flow direction. At least one curved surface may be arranged in the valve such that it is directed towards the exit opening of the second housing part. This means that at least one curved surface is arranged to face away from the flow direction. This also applies to the at least one additional baffle.

So as to avoid wear to the erosion-protection device, the latter comprises preferably an erosion-resistant and wear resistant coating and/or hardened portion. Said coating comprises, for example, plastic material or preferably a metallic erosion or wear resistant material.

The erosion-protection device is preferably formed in one piece with the closure part. The erosion-protection device or the baffle may be formed, for example, in one piece with the inner wall of the closure part. Additional baffles may be formed in one piece with the inner wall of the first housing part and/oder second housing part. However, it is also possible for the additional baffles to be formed in one piece with components of the first housing part and/or of the second housing part. For example, the additional baffle may be formed in one piece on a sealing seat of the first housing part. For example, the erosion-protection device may be formed in one piece on a pipe-bridge portion of the closure part.

In order to make it possible for valves to be retrofitted with the baffle, the latter can be fastened in a releasable manner on the closure part by mechanical fastening means. An additional baffle can be fastened in a releasable manner on the first housing part and/or on the second housing part by mechanical fastening means. The mechanical fastening means used may be, for example, screws, grooves and the like.

As an alternative, or in addition, the baffle may be fastened on the closure part by means of welding. An additional baffle may be fastened on the first housing part and/or on the second housing part by means of welding.

According to an aspect of the invention, the valve can be used in a cracking or in a coking process. The valve can therefore be installed and used in coking or cracking plants. In coking or cracking plants, it is usually the case that a plurality of coking chambers are connected to an oven and serve to produce coke. The valve according to the invention may be arranged, for example, on a coking chamber or coking drum for the purpose of opening and closing the same. Using the valve according to the invention means that the plants have to be inspected and repaired less often, and this results in particularly cost-efficient coking or cracking being possible.

The valve according to the invention can be used, in particular, for a method of influencing the flow in plants, in particular in coking or cracking plants.

A method of avoiding erosion in a valve according to the invention relates to a valve with a first housing part having an inner wall, with a second housing part having an inner wall and with a closure part which is arranged in a movable manner between the first housing part and the second housing part and has an inner wall, wherein, in an open position of the valve, an exit opening of the first housing part is assigned or aligned to an entry opening of the closure part and an exit opening of the closure part is assigned or aligned to an entry opening of the second housing part. The valve is a double gate valve.

In the method according to the invention, a through-going flow is at least partially braked and/or deflected by virtue of an erosion device being arranged in the valve, wherein the erosion-protection device comprises at least one baffle projecting beyond a contour of the inner wall of the closure part, wherein the at least one baffle is arranged on the inner wall of the closure part.

### BRIEF DESCRIPTION OF THE DRAWINGS

Further advantageous embodiments of the invention can be gathered from the following drawings. Like parts and parts with a like function have the same reference signs hereinbelow. In the drawings:
- Figure 1: shows a side view of a first embodiment of a valve according to the invention;
- Figure 2: shows a longitudinal-section illustration of the valve according to Figure 1 in a closed position;
- Figure 3: shows the valve according to Figure 2 during transfer or transition into an open position, i.e. between the closed position and the open position;
- Figure 4: shows the valve according to Figure 2 in an open position;
- Figure 5: shows a perspective sectional view of the valve according to Figure 3;
- Figure 6: shows a perspective sectional view of a second embodiment of a valve according to the invention;
- Figure 7: shows an enlarged perspective sectional view of the valve according to Figure 6;
- Figure 8: shows a perspective illustration of a detail of a third embodiment of a valve according to the invention;
- Figure 9: shows a perspective illustration of a detail of a fourth embodiment of a valve according to the invention; and
- Figure 10: shows a perspective illustration of a detail of a fifth exemplary embodiment of a valve.

### EMBODIMENTS OF THE INVENTION

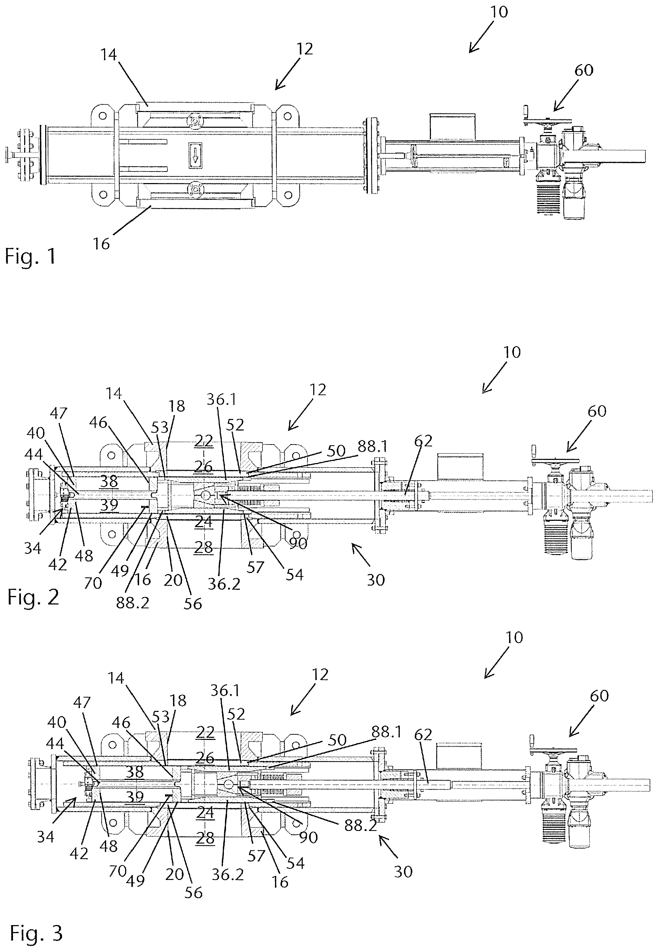

Figure 1 shows that the valve 10 according to a first embodiment of the invention has a housing 12. The valve 10 may be a double-gate valve which is designed in the form of a double-slide gate. The housing 12 comprises a first housing part 14 and a second housing part 16.

Figure 2 shows that the first housing part 14 and the second housing part 16 each have a cylindrical inner wall 18, 20. The first housing part 14 and the second housing part 16 also each have an entry opening 22, 24 and an exit opening 26, 28. A movably arranged closure part 30 is arranged between the first housing part 14 and the second housing part 16. The closure part 30 is designed in the form of a slide gate and comprises a pipe bridge 34 and a pair of gates 36. The pipe bridge 34 has an entry opening 38 and an exit opening 39. In the present case, the pipe bridge 34 comprises an upper, first pipe-bridge portion 40 with the entry opening 38 and a lower, second pipe-bridge portion 42 with the exit opening 39, wherein the pipe-bridge portions 40, 42 are connected by a flexible compensator 44. The first pipe-bridge portion 40 has a first cylindrical inner wall 46 and an annular sealing surface 47 arranged peripherally on the entry opening 38. The sealing surface 47 is directed towards the exit opening 26 of the first housing part 14 and/or aligned therewith. The second pipe-bridge portion 42 has a second cylindrical inner wall 48 and an annular sealing surface 49 arranged peripherally on the exit opening 39. The sealing surface 49 is directed towards the entry opening 24 of the second housing part 16 and/or aligned therewith.

The first housing part 14 comprises a sealing seat 50 which is designed in the form of a sealing ring and has a cylindrical inner wall 52 which, when the sealing seat 50 is in the installed position, is aligned with the cylindrical inner wall 18 of the first housing part 14. The sealing seat 50 is arranged on the exit opening 26 of the first housing part 14. The sealing seat 50 of the first housing part 14 has an annular sealing surface 53 directed away from the exit opening 26. The second housing part 16 likewise comprises a sealing seat 54 which is designed in the form of a sealing ring and has a cylindrical inner wall 56 which is aligned with the inner wall 20 of the second housing part 16. The sealing seat 54 of the second housing part 16 has an annular sealing surface 57 directed away from the entry opening 24. The exit opening 26 of the first housing part 14 is located opposite the entry opening 24 of the second housing part 16. The cylindrical inner wall 42 of the first housing part 14 is aligned with the cylindrical inner wall 46 of the second housing part 16.

In the closed position of the valve 10 shown in Figure 2, the pair of gates 36 is arranged with sealing action upstream of the exit opening 26 of the first housing part 14 and upstream of the entry opening 24 of the second housing part 16. The annular sealing surface 53 of the sealing seat 50 of the first housing part 14 butts against the upper gate 36.1 and the annular sealing surface 57 of the sealing seat 54 of the second housing part 16 butts against the lower gate 36.2. By means of an actuating device 60, which comprises an actuating spindle 62, the slide gate or the closure part 30 can be displaced in the direction of the actuating device 60. The valve 10 has an erosion-protection device 70, which comprises a baffle 72, which is arranged in a peripheral region of the exit opening 39 of the closure part 30. The baffle 72 is arranged in a region of the inner wall 48 of the second pipe-bridge portion 42 of the pipe bridge 34 which is located closer to the actuating device 60 than other regions of the pipe bridge 34 of the closure part 30.

Figure 3 shows that, when the actuating device 60 is actuated, the closure part 30 shifts in the direction of the actuating device 60, wherein the pair of gates 36 is moved away from the exit opening 26 of the first housing part 14 and from the entry opening 24 of the second housing part 16 and the pipe bridge 34, which is arranged alongside in the slide gate, is moved in the direction of the exit opening 26 of the first housing part 14 and of the entry opening 24 of the second housing part 16. When the valve 10 is being opened, first of all only a small gap is open between the exit opening 26 of the first housing part 14 and the entry opening 38 of the closure part 30 as a through-passage from the first housing part 14, via the pipe bridge 34 of the closure part 30, to the second housing part 16.

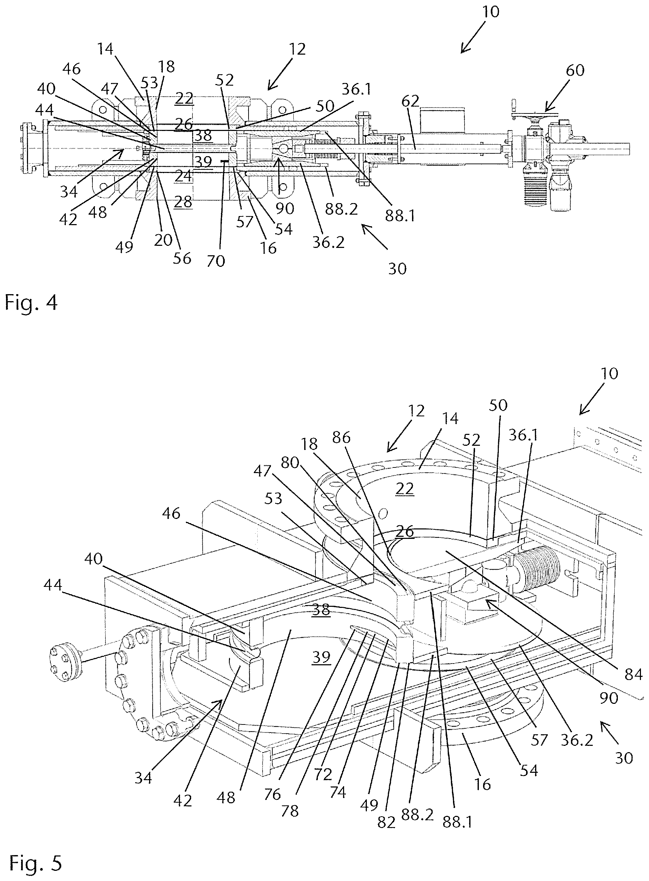

Figure 4 shows the fully open position of the valve 10. This position is achieved when the entry opening 38 of the pipe bridge 34 is arranged relative to the exit opening 26 of the first housing part 14 to permit material flow and the exit opening 39 of the pipe bridge 34 is arranged relative to the entry opening 24 of the second housing part 16 to permit material flow. This position may correspond to a position where the pipe bridge 34 is assigned or aligned to the exit opening 26 of the first housing part 14 and the exit opening 39 of the pipe bridge 34 is assigned or aligned to the entry opening 24 of the second housing part 16. The annular sealing surface 53 of the first housing part 14 here butts with sealing action against the annular sealing surface 47 of the first pipe-bridge portion 40 of the pipe bridge 34 and the annular sealing surface 57 of the second housing part 16 butts with sealing action against the annular sealing surface 49 of the second pipe-bridge portion 42 of the pipe bridge 34.

Figure 5 shows that the baffle 72 is designed in the form of a circle segment and has an arcuate edge 74 and a straight edge 76. The arcuate edge 74 butts against the cylindrical inner wall 48 of the second pipe-bridge portion 42 and is fastened thereon. The baffle 72 has two parallel surfaces 78 which are formed orthogonally or approximately orthogonally with respect or in relation to the contour of the inner wall 48 of the second pipe-bridge portion 42. One of the surfaces 78 is directed towards the entry opening 38 of the closure part 30 or of the pipe bridge 34. The other surface 78 is directed away from the entry opening 38. A respective annular hardened portion 80, 82 is formed on the sealing surface 47 and the sealing surface 49 of the closure part 30. A respective annular hardened portion 86 is formed on the upper side 84 of the upper gate 36.1 and on the underside of the lower gate 36.2. The pipe bridge 34 and the two gates 36.1, 36.2 are arranged in two spaced-apart carrier plates 88.1, 88.2 arranged one above the other. A wedge device 90 is arranged between the gates 36.1, 36.2.

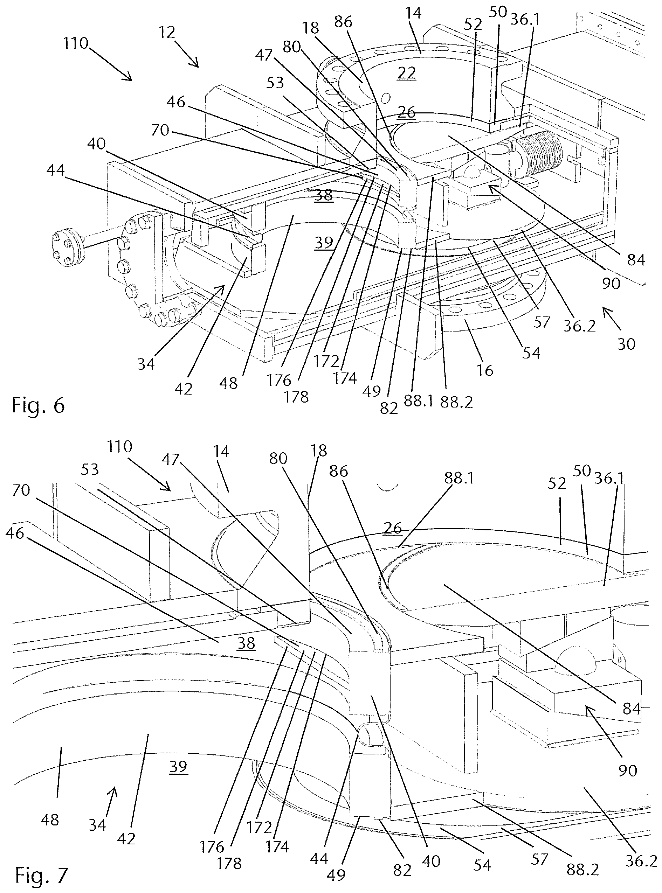

Figure 6 and Figure 7 show a second embodiment of the valve 110 according to the invention. Said valve 110 differs from the valve 10 shown in Figures 1 to 5 in that the baffle 172 is arranged in a peripheral region of the entry opening 38 of the closure part, or of the pipe bridge 34. The baffle 172 has an arcuate edge 174 and a straight edge 176. The arcuate edge 174 butts against the cylindrical inner wall 46 of the first pipe-bridge portion 40 and is fastened thereon. The baffle 172 comprises two parallel surfaces 178 which are formed orthogonally or approximately orthogonally with respect or in relation to the contour of the inner wall 46 of the first pipe-bridge portion 40. One of the surfaces 178 is directed towards the entry opening 38 of the closure part 30.

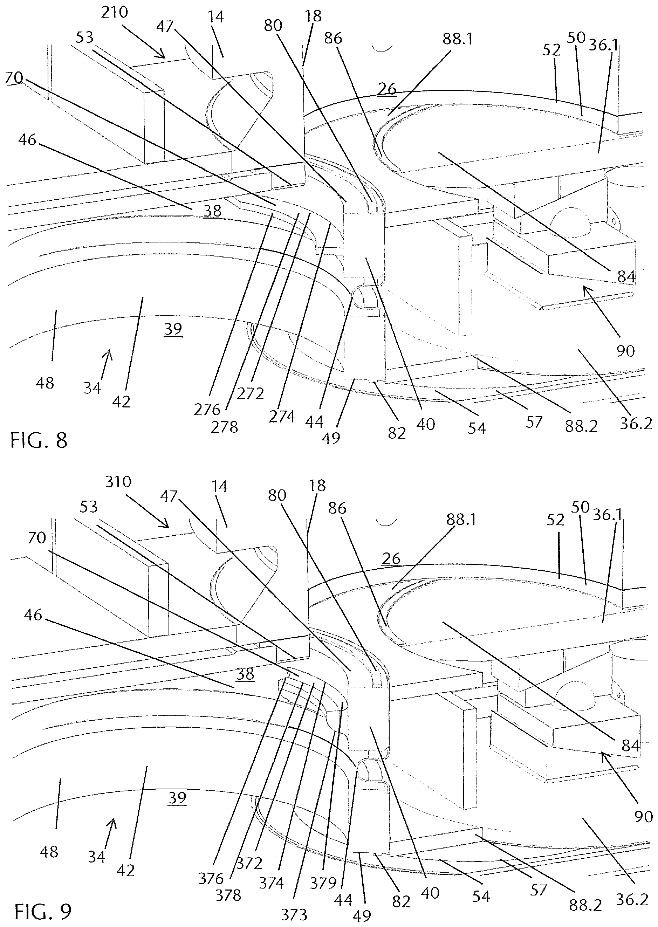

Figure 8 shows a third embodiment of the valve 210 according to the invention. Said valve 210 differs from the valve shown in Figure 7 in that the baffle 272 is designed in the form of a ring segment. The baffle 272 has an arcuate edge 274, which butts against the inner wall of the first pipe-bridge portion 40 and is fastened thereon. Instead of the straight edge, said baffle 272 has an inwardly curved arcuate edge 276. The baffle 272 likewise comprises two parallel surfaces 278 which are formed orthogonally or approximately orthogonally with respect or in relation to the contour of the inner wall 46 of the first pipe-bridge portion 40. One of the surfaces 278 is directed towards the entry opening 38 of the closure part 30.

Figure 9 shows a fourth embodiment of the valve 310 according to the invention. Said valve 310 differs from the valve 210 shown in Figure 8 in that the baffle 372 is designed with an increased material thickness and has an outwardly curved surface 373 directed away from the entry opening 38 of the closure part 30. The baffle 372 has two arcuate edges 374, 376. The arcuate edge 374 butts against the cylindrical inner wall 46 of the first pipe-bridge portion 40 and is fastened thereon. The baffle 372 has a surface 378 which is formed orthogonally or approximately orthogonally with respect or in relation to the contour of the inner wall 46 of the first pipe-bridge portion 40. Said surface 378 is directed towards the entry opening 38 of the closure part 30. A concave surface 379 is arranged between said surface 378 and the inner wall 16.

The baffles 72, 172, 272, 372 are each arranged in a region of the inner wall 46, 48 of the closure part 30 which is located closer to the actuating device 60 than other regions, and therefore, when the respective valves 10, 110, 210, 310 shown in Figures 1 to 9 are being opened, said baffles are arranged upstream of the gap which is established between the exit opening 39 of the closure part 30 and the entry opening 24 of the second housing part 16. When the valve 10, 110, 210, 310 is being opened, the respective baffles 72, 172, 272, 372 cause the through-going flow rate of a material fed into the valve 10 to be braked or reduced and partially deflected away from the inner walls 46, 48 of the closure part 30. This results in fewer solids contained in the material making direct impact, and in any impact being less pronounced, in the region of the entry opening 24 of the second housing part 16, including the sealing surface 57 of the sealing seat 54 of the second housing part 16. Erosion is thus prevented by way of the through-going flow being influenced.

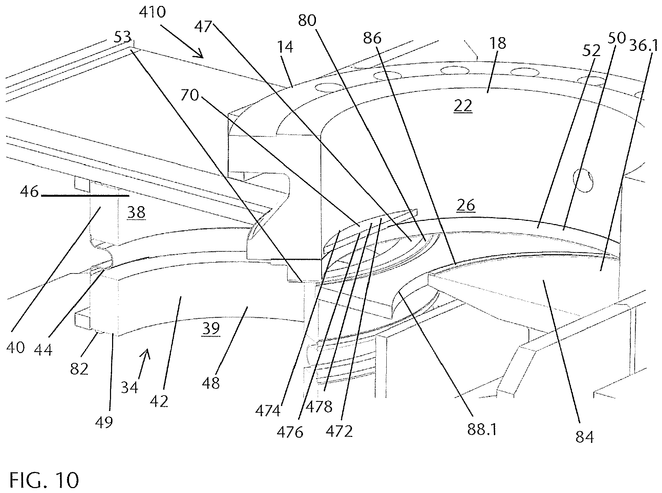

Figure 10 shows a fifth exemplary embodiment of the valve 410. Said valve 410 differs from the valve 10 according to Figures 1 to 5 in that the baffle 472 is arranged on the inner wall 18 of the first housing part 14 in a peripheral region of the exit opening 26. The baffle 472 is in the form of a circle segment and has an arcuate edge 474 and a curved edge 476, wherein the arcuate edge 474 of the baffle 472 butts against the cylindrical inner wall 18 and is fastened thereon. The baffle 472 has two parallel surfaces 478 which are formed orthogonally or approximately orthogonally with respect or in relation to the contour of the inner wall of the first housing part. One of the surfaces 478 is directed towards the entry opening 22 of the first housing part 14.

The baffle 472 is arranged in a region of the inner wall 18 of the first housing part 14 which is spaced apart further from the actuating device 60 than other regions of the inner wall, and therefore, when the valve 410 is being opened, the baffle 462 is arranged upstream of the gap which is established between the exit opening 26 of the first housing part 14 and the entry opening 38 of the closure part 30, c.f. Figure 2. When the valve 410 is being opened, the baffle 472 causes the through-going flow of a material to be braked and partially deflected away from the inner wall 18 of the first housing part 20. This results in fewer solids contained in the material making direct impact, and in any impact being less pronounced, in the region of the entry opening 38 of the closure part 30, including the annular sealing surface 47 and the hardened portion 82. Furthermore, fewer solids make direct impact, and any impact is less pronounced, in the region of the entry opening 24 of the second housing part 16, including the sealing surface 57 of the sealing seat 54 of the second housing part 16.

In some embodiments, the housing 12 or closure part 30 comprises one or more expansion bellows.

Those embodiments of the valve which are shown in the figures can be installed and used in coking or cracking plants and can be arranged, in particular, on a coking drum.

It would be further appreciated that although the invention covers individual embodiments, it also includes combinations of the embodiments discussed. In particular, the features described in one embodiment, not being mutually exclusive to a feature described in another embodiment, may be combined to form yet further embodiments of the invention, the invention being limited only by the appended claims.

## Claims

1. A double gate valve (10, 110, 210, 310, 410) comprising a housing (12) with a first housing part (14) having an inner wall (18); a second housing part (16) having an inner wall (20); and a closure part (30) which is arranged in a movable manner between the first housing part (14) and the second housing part (16) and has an inner wall (46, 48);
wherein, in an open position of the valve (10, 110, 210, 310, 410), an exit opening (26) of the first housing part (14) is assigned to an entry opening (38) of the closure part (30) and an exit opening (39) of the closure part (30) is assigned to an entry opening (24) of the second housing part (16), **characterized in that** the valve (10, 110, 210, 310, 410) comprises an erosion-protection device (70), the erosion-protection device (70) comprises at least one baffle (72, 172, 272, 372, 472) projecting beyond a contour of the inner wall (46, 48) of the closure part (30), wherein the at least one baffle (72, 172, 272, 372, 472) is arranged on the inner wall (46, 48) of the closure part (30).

2. The valve (10, 110, 210, 310, 410) according to Claim 1, wherein the erosion-protection device (70) comprises at least one baffle (72, 172, 272, 372, 472) projecting beyond a contour of the inner wall (18) of the first housing part (14) and/or of the inner wall (20) of the second housing part (16).

3. The valve (10, 110, 210, 310, 410) according to Claim 1, wherein the closure part (30) comprises a pipe bridge (34), wherein, in an open position of the valve (10, 110, 210, 310, 410), the pipe bridge (34) can be arranged in a connecting manner between the first housing part (14) and the second housing part (16), and wherein the inner wall (46, 48) of the closure part (30) forms an inner wall of the pipe bridge (34).

4. The valve (10, 110, 210, 310, 410) according to one or more of the preceding claims, wherein at least one baffle (72, 172, 272, 372, 472) is arranged in a peripheral region of the entry opening (38) of the closure part (30).

5. The valve (10, 110, 210, 310, 410) according to one or more of the preceding claims, wherein at least one baffle (72, 172, 272, 372, 472) is arranged in a peripheral region of the exit opening (39) of the closure part (30).

6. The valve (10, 110, 210, 310, 410) according to one or more of the preceding claims, wherein at least one baffle (72, 172, 272, 372, 472) is arranged on the inner wall (18) of the first housing part (14) and/or at least one baffle (72, 172, 272, 372, 472) is arranged on the inner wall (20) of the second housing part (16).

7. The valve (10, 110, 210, 310, 410) according to one or more of the preceding claims, wherein at least one baffle (72, 172, 272, 372, 472) is arranged in a peripheral region of the exit opening (26) of the first housing part (14).

8. The valve (10, 110, 210, 310, 410) according to one or more of the preceding claims, wherein at least one baffle (72, 172, 272, 372, 472) comprises at least one plate-like part.

9. The valve (10, 110, 210, 310, 410) according to one or more of the preceding claims, wherein at least one baffle (72, 172, 272, 372, 472) comprises at least one surface (78, 178, 278, 378, 478) which is formed orthogonally in relation to the contour of the inner wall (46, 48) of the closure part (30), of the inner wall (18) of the first housing part (14) and/or of the inner wall (20) of the second housing part (16).

10. The valve (10, 110, 210, 310, 410) according to one or more of the preceding claims, wherein at least one baffle (72, 172, 272, 372, 472) comprises at least one surface which is inclined in relation to the contour of the inner wall (46, 48) of the closure part (30), of the inner wall (18) of the first housing part (14) and/or of the inner wall (20) of the second housing part (16).

11. The valve (10, 110, 210, 310, 410) according to one or more of the preceding claims, wherein at least one baffle (72, 172, 272, 372, 472) comprises at least one curved surface (373, 379).

12. The valve (10, 110, 210, 310, 410) according to one or more of the preceding claims, wherein at least one baffle (72, 172, 272, 372, 472) comprises an erosion-resistant coating.

13. The valve (10, 110, 210, 310, 410) according to one or more of the preceding claims, wherein at least one baffle (72, 172, 272, 372, 472) is formed in one piece with the first housing part (14), the second housing part (16) and/or the closure part (30).

14. The valve (10, 110, 210, 310, 410) according to one or more of the preceding claims, wherein at least one baffle (72, 172, 272, 372, 472) is fastened on the first housing part (14), on the second housing part (16) and/or on the closure part (30) by mechanical fastening means.

15. Use of a valve (10, 110, 210, 310, 410) according to one or more of the preceding claims in a cracking or coking process.

16. A method of avoiding erosion in a valve (10, 110, 210, 310, 410) with a first housing part (14) having an inner wall (18), with a second housing part (16) having an inner wall (20) and with a closure part (30) which is arranged in a movable manner between the first housing part (14) and the second housing part (16) and has an inner wall (46, 48), wherein, in an open position of the valve (10, 110, 210, 310, 410), an exit opening (26) of the first housing part (14) is assigned to an entry opening (38) of the closure part (30) and an exit opening (39) of the closure part (30) is assigned to an entry opening (24) of the second housing part (16), wherein the valve (10, 110, 210, 310, 410) is designed in the form of a double gate valve, wherein a through-going flow is at least partially braked and/or deflected by virtue of an erosion device being arranged in the valve, and **characterized in that** the erosion-protection device (70) comprises at least one baffle (72, 172, 272, 372, 472) projecting beyond a contour of the inner wall (46, 48) of the closure part (30), wherein the at least one baffle (72, 172, 272, 372, 472) is arranged on the inner wall (46, 48) of the closure part (30).

17. The method according to Claim 16, wherein the erosion-protection device (70) comprises at least one baffle (72, 172, 272, 372, 472) projecting beyond a contour of the inner wall (18) of the first housing part (14) and/or of the inner wall (20) of the second housing part (16).

18. The method according to Claim 16, wherein the closure part (30) comprises a pipe bridge (34), wherein, in an open position of the valve (10, 110, 210, 310, 410), the pipe bridge (34) can be arranged in a connecting manner between the first housing part (14) and the second housing part (16), and wherein the inner wall (46, 48) of the closure part (30) forms an inner wall of the pipe bridge (34).

19. The method according to one or more of claims 16 to 18, wherein at least one baffle (72, 172, 272, 372, 472) is arranged in a peripheral region of the entry opening (38) of the closure part (30).

20. The method according to one or more of claims 16 to 19, wherein at least one baffle (72, 172, 272, 372, 472) is arranged in a peripheral region of the exit opening (39) of the closure part (30).

## Patentansprüche

1. Ein Doppelplattenschieber (10, 110, 210, 310, 410), der ein Gehäuse (12) mit einem ersten Gehäuseteil (14), das eine innere Wand (18) aufweist, einem zweiten Gehäuseteil (16), das eine innere Wand (20) aufweist, und einem Verschlussteil (30), das auf bewegliche Weise zwischen dem ersten Gehäuseteil (14) und dem zweiten Gehäuseteil (16) angeordnet ist und das eine innere Wand (46, 48) aufweist, umfasst;
wobei in einer offenen Stellung des Schiebers (10, 110, 210, 310, 410) eine Ausgangsöffnung (26) des ersten Gehäuseteils (14) einer Eingangsöffnung (38) des Verschlussteils (30) zugeordnet ist und eine Ausgangsöffnung (39) des Verschlussteils (30) einer Eingangsöffnung (24) des zweiten Gehäuseteils (16) zugeordnet ist, **dadurch gekennzeichnet, dass** der Schieber (10, 110, 210, 310, 410) eine Erosionsschutzvorrichtung (70) umfasst und dass die Erosionsschutzvorrichtung (70) wenigstens ein Prallblech (72, 172, 272, 372, 472) umfasst, das über eine Kontur der inneren Wand (46, 48) des Verschlussteils (30) vorsteht, wobei das wenigstens eine Prallblech (72, 172, 272, 372, 472) an der inneren Wand (46, 48) des Verschlussteils (30) angeordnet ist.

2. Der Schieber (10, 110, 210, 310, 410) gemäß Anspruch 1, wobei die Erosionsschutzvorrichtung (70) wenigstens ein Prallblech (72, 172, 272, 372, 472) umfasst, das über eine Kontur der inneren Wand (18) des ersten Gehäuseteils (14) und/oder der inneren Wand (20) des zweiten Gehäuseteils (16) vorsteht.

3. Der Schieber (10, 110, 210, 310, 410) gemäß Anspruch 1, wobei das Verschlussteil (30) eine Rohrbrücke (34) umfasst, wobei in einer offenen Stellung des Schiebers (10, 110, 210, 310, 410) die Rohrbrücke (34) auf verbindende Weise zwischen dem ersten Gehäuseteil (14) und dem zweiten Gehäuseteil (16) angeordnet werden kann, und wobei die innere Wand (46, 48) des Verschlussteils (30) eine innere Wand der Rohrbrücke (34) bildet.

4. Der Schieber (10, 110, 210, 310, 410) gemäß einem oder mehreren der vorigen Ansprüche, wobei wenigstens ein Prallblech (72, 172, 272, 372, 472) in einem peripheren Bereich der Eingangsöffnung (38) des Verschlussteils (30) angeordnet ist.

5. Der Schieber (10, 110, 210, 310, 410) gemäß einem oder mehreren der vorigen Ansprüche, wobei wenigstens ein Prallblech (72, 172, 272, 372, 472) in einem peripheren Bereich der Ausgangsöffnung (39) des Verschlussteils (30) angeordnet ist.

6. Der Schieber (10, 110, 210, 310, 410) gemäß einem oder mehreren der vorigen Ansprüche, wobei wenigstens ein Prallblech (72, 172, 272, 372, 472) an der inneren Wand (18) des ersten Gehäuseteils (14) angeordnet ist und/oder wenigstens ein Prallblech (72, 172, 272, 372, 472) an der inneren Wand (20) des zweiten Gehäuseteils (16) angeordnet ist.

7. Der Schieber (10, 110, 210, 310, 410) gemäß einem oder mehreren der vorigen Ansprüche, wobei wenigstens ein Prallblech (72, 172, 272, 372, 472) in einem peripheren Bereich der Ausgangsöffnung (26) des ersten Gehäuseteils (14) angeordnet ist.

8. Der Schieber (10, 110, 210, 310, 410) gemäß einem oder mehreren der vorigen Ansprüche, wobei wenigstens ein Prallblech (72, 172, 272, 372, 472) wenigstens ein plattenförmiges Teil umfasst.

9. Der Schieber (10, 110, 210, 310, 410) gemäß einem oder mehreren der vorigen Ansprüche, wobei wenigstens ein Prallblech (72, 172, 272, 372, 472) wenigstens eine Fläche (78, 178, 278, 378, 478) umfasst, die orthogonal in Bezug auf die Kontur der inneren Wand (46, 48) des Verschlussteils (30), der inneren Wand (18) des ersten Gehäuseteils (14) und/oder der inneren Wand (20) des zweiten Gehäuseteils (16) ausgebildet ist.

10. Der Schieber (10, 110, 210, 310, 410) gemäß einem oder mehreren der vorigen Ansprüche, wobei wenigstens ein Prallblech (72, 172, 272, 372, 472) wenigstens eine Fläche umfasst, die geneigt in Bezug auf die Kontur der inneren Wand (46, 48) des Verschlussteils (30), der inneren Wand (18) des ersten Gehäuseteils (14) und/oder der inneren Wand (20) des zweiten Gehäuseteils (16) ausgebildet ist.

11. Der Schieber (10, 110, 210, 310, 410) gemäß einem oder mehreren der vorigen Ansprüche, wobei wenigstens ein Prallblech (72, 172, 272, 372, 472) wenigstens eine gewölbte Fläche (373, 379) umfasst.

12. Der Schieber (10, 110, 210, 310, 410) gemäß einem oder mehreren der vorigen Ansprüche, wobei wenigstens ein Prallblech (72, 172, 272, 372, 472) eine erosionsbeständige Beschichtung umfasst.

13. Der Schieber (10, 110, 210, 310, 410) gemäß einem oder mehreren der vorigen Ansprüche, wobei wenigstens ein Prallblech (72, 172, 272, 372, 472) einstückig mit dem ersten Gehäuseteil (14), dem zweiten Gehäuseteil (16) und/oder dem Verschlussteil (30) ausgebildet ist.

14. Der Schieber (10, 110, 210, 310, 410) gemäß einem oder mehreren der vorigen Ansprüche, wobei wenigstens ein Prallblech (72, 172, 272, 372, 472) an dem ersten Gehäuseteil (14), an dem zweiten Gehäuseteil (16) und/oder an dem Verschlussteil (30) durch mechanische Befestigungsmittel befestigt ist.

15. Verwendung eines Schiebers (10, 110, 210, 310, 410), der gemäß einem oder mehreren der vorigen Ansprüche ausgebildet ist, in einem Crack- oder Verkokungsverfahren.

16. Ein Verfahren zum Vermeiden von Erosion in einem Schieber (10, 110, 210, 310, 410) mit einem ersten Gehäuseteil (14), das eine innere Wand (18) aufweist, mit einem zweiten Gehäuseteil (16), das eine innere Wand (20) aufweist, und mit einem Verschlussteil (30), das auf bewegliche Weise zwischen dem ersten Gehäuseteil (14) und dem zweiten Gehäuseteil (16) angeordnet ist und das eine innere Wand (46, 48) aufweist,
wobei in einer offenen Stellung des Schiebers (10, 110, 210, 310, 410) eine Ausgangsöffnung (26) des ersten Gehäuseteils (14) einer Eingangsöffnung (38) des Verschlussteils (30) zugeordnet ist und eine Ausgangsöffnung (39) des Verschlussteils (30) einer Eingangsöffnung (24) des zweiten Gehäuseteils (16) zugeordnet ist, wobei der Schieber (10, 110, 210, 310, 410) in der Form eines Doppelplattenschiebers ausgebildet ist, wobei eine durchfließende Strömung aufgrund einer Erosionsvorrichtung, die in dem Schieber angeordnet ist, zumindest teilweise abgebremst und/oder umgelenkt wird, **dadurch gekennzeichnet, dass** die Erosionsschutzvorrichtung (70) wenigstens ein Prallblech (72, 172, 272, 372, 472) umfasst, das über eine Kontur der inneren Wand (46, 48) des Verschlussteils (30) vorsteht, wobei das wenigstens eine Prallblech (72, 172, 272, 372, 472) an der inneren Wand (46, 48) des Verschlussteils (30) angeordnet ist.

17. Das Verfahren gemäß Anspruch 16, wobei die Erosionsschutzvorrichtung (70) wenigstens ein Prallblech (72, 172, 272, 372, 472) umfasst, das über eine Kontur der inneren Wand (18) des ersten Gehäuseteils (14) und/oder der inneren Wand (20) des zweiten Gehäuseteils (16) vorsteht.

18. Das Verfahren gemäß Anspruch 16, wobei das Verschlussteil (30) eine Rohrbrücke (34) umfasst, wobei in einer offenen Stellung des Schiebers (10, 110, 210, 310, 410) die Rohrbrücke (34) auf verbindende Weise zwischen dem ersten Gehäuseteil (14) und dem zweiten Gehäuseteil (16) angeordnet werden kann, und wobei die innere Wand (46, 48) des Verschlussteils (30) eine innere Wand der Rohrbrücke (34) bildet.

19. Das Verfahren gemäß einem oder mehreren der Ansprüche 16 bis 18, wobei wenigstens ein Prallblech (72, 172, 272, 372, 472) in einem peripheren Bereich der Eingangsöffnung (38) des Verschlussteils (30) angeordnet ist.

20. Das Verfahren gemäß einem oder mehreren der Ansprüche 16 bis 19, wobei wenigstens ein Prallblech (72, 172, 272, 372, 472) in einem peripheren Bereich der Ausgangsöffnung (39) des Verschlussteils (30) angeordnet ist.

## Revendications

1. Soupape à double opercule (10, 110, 210, 310, 410) comprenant un corps (12) dotée d'un premier élément de corps (14) possédant une paroi intérieure (18), d'un second élément de corps (16) possédant une paroi intérieure (20) et d'un élément d'obturation (30) qui est disposé de manière mobile entre le premier élément de corps (14) et le second élément de corps (16) et possède une paroi intérieure (46, 48),
dans laquelle, lorsque la soupape (10, 110, 210, 310, 410) est en position ouverte, une ouverture de sortie (26) du premier élément de corps (14) est associée à une ouverture d'entrée (38) de l'élément d'obturation (30) et une ouverture de sortie (39) de l'élément d'obturation (30) est associée à une ouverture d'entrée (24) du second élément de corps (16), **caractérisée en ce que** la soupape (10, 110, 210, 310, 410) comprend un dispositif de protection contre l'érosion (70) et que ce dispositif contre l'érosion (70) comprend au moins une cloison (72, 172, 272, 372, 472) faisant saillie au-delà d'un contour de la paroi intérieure (46, 48) de l'élément d'obturation (30), l'au moins une cloison (72, 172, 272, 372, 472) étant disposée sur la paroi intérieure (46, 48) de l'élement d'obturation (30).

2. Soupape (10, 110, 210, 310, 410) selon la revendication 1, dans laquelle le dispositif de protection contre l'érosion (70) comprend au moins une cloison (72, 172, 272, 372, 472) faisant saillie au-delà d'un contour de la paroi intérieure (18) du premier élément de corps (14) et/ou de la paroi intérieure (20) du second élément de corps (16).

3. Soupape (10, 110, 210, 310, 410) selon la revendication 1, dans laquelle l'élément d'obturation (30) comprend un pont tubulaire (34), ce pont tubulaire (34) pouvant, lorsque la soupape (10, 110, 210, 310, 410) est en position ouverte, être disposé de manière à raccorder le premier élément de corps (14) et le second élément de corps (16) et la paroi intérieure (46, 48) de l'élément d'obturation (30) formant une paroi intérieure du pont tubulaire (34).

4. Soupape (10, 110, 210, 310, 410) selon une ou plusieurs des revendications précédentes, dans laquelle au moins une cloison (72, 172, 272, 372, 472) est disposée dans une région périphérique de l'ouverture d'entrée (38) de l'élément d'obturation (30).

5. Soupape (10, 110, 210, 310, 410) selon une ou plusieurs des revendications précédentes, dans laquelle au moins une cloison (72, 172, 272, 372, 472) est disposée dans une région périphérique de l'ouverture de sortie (39) de l'élément d'obturation (30).

6. Soupape (10, 110, 210, 310, 410) selon une ou plusieurs des revendications précédentes, dans laquelle au moins une cloison (72, 172, 272, 372, 472) est disposée sur la paroi intérieure (18) du premier élément de corps (14) et/ou au moins une cloison (72, 172, 272, 372, 472) est disposée sur la paroi intérieure (20) du second élément de corps (16).

7. Soupape (10, 110, 210, 310, 410) selon une ou plusieurs des revendications précédentes, dans laquelle au moins une cloison (72, 172, 272, 372, 472) est disposée dans une région périphérique de l'ouverture de sortie (26) du premier élément de corps (14).

8. Soupape (10, 110, 210, 310, 410) selon une ou plusieurs des revendications précédentes, dans laquelle au moins une cloison (72, 172, 272, 372, 472) comprend au moins un élément en forme de plaque.

9. Soupape (10, 110, 210, 310, 410) selon une ou plusieurs des revendications précédentes, dans laquelle au moins une cloison (72, 172, 272, 372, 472) comprend au moins une surface (78, 178, 278, 378, 478) qui est formée perpendiculairement au contour de la paroi intérieure (46, 48) de l'élément d'obturation (30), de la paroi intérieure (18) du premier élément de corps (14) et/ou de la paroi intérieure (20) du second élément de corps (16).

10. Soupape (10, 110, 210, 310, 410) selon une ou plusieurs des revendications précédentes, dans laquelle au moins une cloison (72, 172, 272, 372, 472) comprend au moins une surface qui est inclinée par rapport au contour de la paroi intérieure (46, 48) de l'élément d'obturation (30), de la paroi intérieure (18) du premier élément de corps (14) et/ou de la paroi intérieure (20) du second élément de corps (16).

11. Soupape (10, 110, 210, 310, 410) selon une ou plusieurs des revendications précédentes, dans laquelle au moins une cloison (72, 172, 272, 372, 472) comprend au moins une surface courbe (373, 379).

12. Soupape (10, 110, 210, 310, 410) selon une ou plusieurs des revendications précédentes, dans laquelle au moins une cloison (72, 172, 272, 372, 472) comprend un revêtement résistant à l'érosion.

13. Soupape (10, 110, 210, 310, 410) selon une ou plusieurs des revendications précédentes, dans laquelle au moins une cloison (72, 172, 272, 372, 472) est formée d'une seule pièce avec le premier élément de corps (14), le second élément de corps (16) et/ou l'élément d'obturation (30).

14. Soupape (10, 110, 210, 310, 410) selon une ou plusieurs des revendications précédentes, dans laquelle au moins une cloison (72, 172, 272, 372, 472) est fixée sur le premier élément de corps (14), sur le second élément de corps (16) et/ou sur l'élément d'obturation (30) par des moyens de fixation mécaniques.

15. Utilisation d'une soupape (10, 110, 210, 310, 410) selon une ou plusieurs des revendications précédentes dans un processus de craquage ou de cokéfaction.

16. Procédé pour éviter l'érosion dans une soupape (10, 110, 210, 310, 410) dotée d'un premier élément de corps (14) possédant une paroi intérieure (18), d'un second élément de corps (16) possédant une paroi intérieure (20) et d'un élément d'obturation (30) qui est disposé de manière mobile entre le premier élément de corps (14) et le second élément de corps (16) et possède une paroi intérieure (46, 48), dans laquelle, lorsque la soupape (10, 110, 210, 310, 410) est en position ouverte, une ouverture de sortie (26) du premier élément de corps (14) est associée à une ouverture d'entrée (38) de l'élément d'obturation (30) et une ouverture de sortie (39) de l'élément d'obturation (30) est associée à une ouverture d'entrée (24) du second élément de corps (16), dans lequel la soupape (10, 110, 210, 310, 410) est conçue sous la forme d'une soupape à double opercule dans laquelle un flux traversant est au moins partiellement freiné et/ou dévié au moyen d'un dispositif d'érosion disposé dans la soupape, et **caractérisé en ce que** le dispositif de protection contre l'érosion (70) comprend au moins une cloison (72, 172, 272, 372, 472) faisant saillie au-delà d'un contour de la paroi intérieure (46, 48) de l'élément d'obturation (30), l'au moins une cloison (72, 172, 272, 372, 472) étant disposée sur la paroi intérieure (46, 48) de l'élément d'obturation (30).

17. Procédé selon la revendication 16, dans lequel le dispositif de protection contre l'érosion (70) comprend au moins une cloison (72, 172, 272, 372, 472) faisant saillie au-delà d'un contour de la paroi intérieure (18) du premier élément de corps (14) et/ou de la paroi intérieure (20) du second élément de corps (16).

18. Procédé selon la revendication 16, dans lequel l'élément d'obturation (30) comprend un pont tubulaire (34), ce pont tubulaire (34) pouvant, lorsque la soupape (10, 110, 210, 310, 410) est en position ouverte, être disposé de manière à raccorder le premier élément de corps (14) et le second élément de corps (16), et dans lequel la paroi intérieure (46, 48) de l'élément d'obturation (30) forme une paroi intérieure du pont tubulaire (34).

19. Procédé selon une ou plusieurs des revendications 16 à 18, dans lequel au moins une cloison (72, 172, 272, 372, 472) est disposée dans une région périphérique de l'ouverture d'entrée (38) de l'élément d'obturation (30).

20. Procédé selon une ou plusieurs des revendications 16 à 19, dans lequel au moins une cloison (72, 172, 272, 372, 472) est disposée dans une région périphérique de l'ouverture de sortie (39) de l'élément d'obturation (30).
